# EUROPÄISCHE PATENTSCHRIFT

(11) **EP 2 170 999 B1**
(45) Veröffentlichungstag und Bekanntmachung des Hinweises auf die Patenterteilung: **05.01.2011**
(21) Anmeldenummer: 08758651.7
(22) Anmeldetag: 21.05.2008
(51) Int. Cl.: C09B 67/10, C09B 67/36, C08K 5/00, C09D 11/00

(54) **VERFAHREN ZUR HERSTELLUNG VON REINEM C.I. PIGMENT ORANGE 74**
METHOD FOR THE PRODUCTION OF PURE C.I. PIGMENT ORANGE 74
PROCÉDÉ DE PRODUCTION DE C.I. PIGMENT ORANGE 74 PUR

(30) Priorität: 22.06.2007 DE 102007028871
(43) Veröffentlichungstag der Anmeldung: 07.04.2010
(73) Patentinhaber: Clariant Finance (BVI) Limited, Road Town, Tortola (VG)
(72) Erfinder: HUNDSDORF, Thomas, 64331 Weiterstadt (DE); RAUSCHMANN, Willi, 65931 Frankfurt am Main (DE)
(74) Vertreter: Hütter, Klaus
(86) Internationale Anmeldenummer: PCT/EP2008/004043
(87) Internationale Veröffentlichungsnummer: WO 2009/000375

(56) Entgegenhaltungen:
- WO-A-2005/105927
- WO-A-2005/111151
- DE-A1-102004 045 389
- GB-A- 2 104 911

## Beschreibung

Die vorliegende Erfindung liegt auf dem Gebiet der Azopigmente. Es ist bekannt, dass bestimmte Azopigmente, meist solche aus der Gruppe der Naphtol AS- und der Benzimidazolon-Pigmente, aus der Syntheselösung in kleinen unlöslichen Teilchen (Primärkristalliten) ausfallen, die noch einer Nachbehandlung (Finish) bedürfen. Diese sind dem Fachmann als Azo-Finish-Pigmente geläufig. Beim Finish werden physikalische Eigenschaften, wie Kristallform, Kristallgröße und -güte, sowie Teilchengrößenverteilung in Richtung auf ein gewünschtes Optimum verändert. Trocknet man nämlich einen Rohpigment-Presskuchen direkt nach der Synthese und dem Waschen, so lagern sich die Primärteilchen oft in erheblichem Maße zu Agglomeraten und Aggregaten zusammen. Das führt zu kornharten, farbschwachen und schlecht dispergierbaren Pigmenten, die sich oft auch durch Mahlung nicht mehr in eine anwendungstechnisch brauchbare Form bringen lassen.

Der übliche Pigmentfinish ist eine thermische Nachbehandlung, wobei durch Erhitzen der Pigment-Rohsuspension oder des salzfrei gewaschenen, isolierten und wieder angeteigten Pigmentpresskuchens in Wasser und/oder organischen Lösemitteln eine bessere Ausbildung von Kristallen erreicht wird. Dabei wird der Feinstkornanteil, der besonders für die Agglomerationsneigung der Pigmente verantwortlich ist, verringert und folglich eine engere Korngrößenverteilung erzielt. In organischen Lösemitteln werden besonders schwerlösliche Pigmente bei Temperaturen von 80 bis 150 °C nachbehandelt. Es werden dafür z. B. Alkohole, Eisessig, Chlorbenzol, o-Dichlorbenzol und Dimethylformamid verwendet.

Azo-Finish-Pigmente mit hoher chemischer und optischer Reinheit wurden bislang meist in Dimethylformamid oder N-Methyl-pyrrolidon gefinisht. Diese Finishmethode führt meist zu den gewünschten guten coloristischen Eigenschaften und liefert das Azopigment in einer Qualität, die weitgehend frei von Verunreinigungen ist, da die Filtration direkt aus dem organischen Lösemittel erfolgt, in welchem chemische Verunreinigungen gut löslich sind. Die anschließende Rückgewinnung des Lösemittels durch Destillation ist nicht besonders kostengünstig und insbesondere in Falle von Dimethylformamid aus ökotoxikologischen Gründen bedenklich, da der Destillationssumpf mit den Verunreinigungsrückständen nur durch Verbrennung entsorgt werden kann. Manchmal kann ein Pigmentfinish auch in anderen organischen Lösemitteln erfolgen wie z. B. Alkoholen, Chlorbenzol oder o-Dichlorbenzol. Der Finish mit diesen Lösemitteln erfolgt im Lösemittel/Wasser-Gemisch, wobei der Anteil an Wasser 1 bis 90 %, bevorzugt 10-80 % beträgt. Das Abdestillieren des Lösemittels ist kostengünstiger, da die Rückgewinnung - wie im Falle von Dimethylformamid - nicht separat bewerkstelligt werden muss, sondern direkt im Prozessschritt erfolgen kann. Nachteil dieser alternativen Methoden ist, dass Verunreinigungen in der wässrigen Pigmentsuspension (Sumpf) verbleiben und sich auf der Oberfläche des Pigmentes niederschlagen. Dies führt in den meisten Fällen zu reduzierter chemischer und optischer Reinheit des Pigmentes.

Die DE 23 02 517 A1 beschreibt den Einsatz alkalischer Medien zur Reinigung von Azopigmenten. Die DE 31 14 928 A1 beschreibt ein Verfahren zum Reinigen von rohen organischen Pigmenten, bei dem das Pigment in einem Gemisch aus zwei miteinander nicht mischbaren organischen Flüssigkeiten suspendiert wird und anschließend die die Verunreinigungen enthaltene Flüssigkeit abgetrennt wird.

Die JP 61-233062 beschreibt ein Verfahren zum Reinigen von Azofarbstoffen unter Verwendung von NaOH, Nitrobenzol und einer oberflächenaktiven Substanz.

In der CH 653 048 A5 wird ein Finish in Dimethylformamid beschrieben.

In der DE 102004045389 werden organische Pigmente durch Mikrowellen nach behandelt. Die organischen Azo farbmittel der WO2005105927 werden in einem Mikroreaktor hergestellt und über eine Membran gereinigt.

C.I. Pigment Orange 74 der Formel (I) gehört zur vorstehend beschriebenen Gruppe der Azo-Finish-Pigmente und hat große industrielle Bedeutung insbesondere im Bereich der Lackanwendungen.

Die Aufgabe der vorliegenden Erfindung bestand darin, ein geeignetes Verfahren zur Herstellung von reinem C.I. Pigment Orange 74 der Formel (I) bereitzustellen, das im Hinblick auf Sicherheit, Umweltverträglichkeit und Ressourceneinsatz dem bislang üblichen Lösemittelfinish überlegen ist und gleichzeitig eine hohe Reinheit dieses Pigmentes gewährleistet.

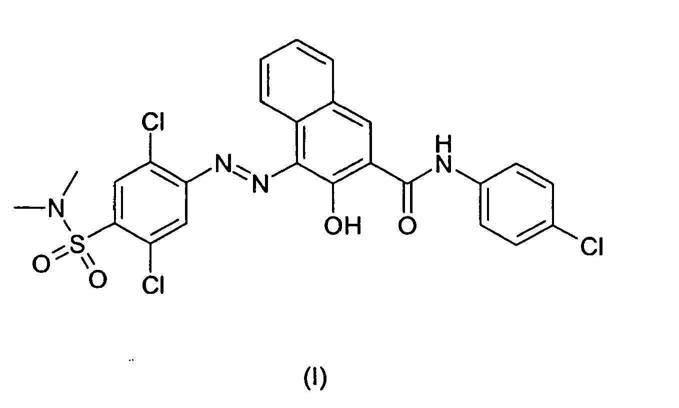

Gegenstand der vorliegenden Erfindung ist ein Verfahren zur Herstellung von reinem C.I. Pigment Orange 74, dadurch gekennzeichnet, dass man eine wässrige Suspension von C.I. Pigment Orange 74 -Rohpigment, gegebenenfalls nach Zugabe eines oder mehrerer organischer Lösemittel aus der Gruppe iso-Butanol, Chlorbenzol und o-Dichlorbenzol, einer Finishbehandlung unterwirft, gegebenenfalls das organische Lösemittel durch eine Destillation entfernt, und die zurückbleibende wässrige Pigmentsuspension mit einem nichtionischen Tensid versetzt, auf eine Temperatur von 30 bis 100 °C bringt und anschließend das Pigment abfiltriert.

Die erfindungsgemäße Finishbehandlung wird zweckmäßigerweise in einem beheizbaren Reaktionsgefäß mit Rührvorrichtung durchgeführt. Der bevorzugte Temperaturbereich für die Finishbehandlung liegt zwischen 30 und 200 °C, insbesondere zwischen 80 und 200 °C.

Im Falle, dass die Finishbehandlung in Wasser durchgeführt wird, wird vorzugsweise unter Druck und bei Temperaturen von 100 bis 200 °C gearbeitet.

Es kann vorteilhaft sein, während der Finishbehandlung zusätzliche Mengen an Wasser oder organischem Lösemittel zuzusetzen. Der Anteil an flüssigem

Medium (Wasser und organisches Lösemittel) kann im Bereich von 80 bis 99 Gew.-%, bevorzugt im Bereich von 85 bis 95 Gew.-%, bezogen auf die Gesamtmenge der Pigmentsuspension, liegen.

Die Dauer der Finishbehandlung kann in weiten Grenzen schwanken, zweckmäßig sind 10 Minuten bis 10 Stunden, vorzugsweise 30 Minuten bis 5 Stunden.

Nach Beendigung der Finishbehandlung wird das organische Lösemittel, sofern vorhanden, zweckmäßigerweise durch eine Wasserdampfdestillation entfernt. Anschließend wird die wässrige Pigmentsuspension mit einem nichtionischen Tensid versetzt, zweckmäßigerweise in einer Menge von 5 bis 100 Gew.-%, vorzugsweise 7,5 bis 50 Gew.-%, insbesondere 10 bis 30 Gew.-%, bezogen auf das Gewicht des Pigments.

Die Mischung wird auf eine Temperatur von 30 bis 100 °C, vorzugsweise 50 bis 90 °C, gebracht und zweckmäßigerweise für eine Zeit von 5 min bis 5 Stunden, bevorzugt 10 min bis 2 Stunden, bei dieser Temperatur gehalten, vorzugsweise unter Rühren oder Schütteln. Eine längere Behandlung mit dem nichtionischen Tensid ist natürlich möglich, bringt aber keine technischen Vorteile. Anschließend wird das Pigment abfiltriert.

Als nichtionische Tenside kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht. Besonders bevorzugt sind Fettalkoholpolyglykolether.

Das nichtionische Tensid bindet die chemischen Verunreinigungen derart, dass sie sich nach anschließender Temperaturbehandlung nicht auf dem Pigment, sondern im Filtrat befinden.

Es zeigte sich weiterhin, dass das nach dem erfindungsgemäßen Verfahren behandelte C.I. Pigment Orange 74 überraschenderweise sogar eine höhere Qualität im Hinblick auf Reinheit, Farbton, Farbstärke und Farbreinheit aufweist als nach einem herkömmlichen Finish in Dimethylformamid oder N-Methyl-pyrrolidon.

Gegenstand der Erfindung ist daher auch ein C.I. Pigment Orange 74, hergestellt nach dem erfindungsgemäßen Verfahren. Insbesondere zeichnet sich das neue C.I. Pigment Orange 74 durch eine optische Reinheit C* (ausgedrückt in absoluter Reinheit in einem Alkyd-Melamin-Lack) von mindestens 43,00 aus. Insbesondere zeichnet sich das neue C.I. Pigment Orange 74 auch durch einen absoluten Farbwinkel H* (in einem Alkyd-Melamin-Lack) von mindestens 29,00 aus. Insbesondere zeichnet sich das neue C.I. Pigment Orange 74 auch durch eine absolute Helligkeit L* (in einem Alkyd-Melamin-Lack) von mindestens 73,60 aus.

Das erfindungsgemäße C.I. Pigment Orange 74 lässt sich zum Pigmentieren von hochmolekularen organischen Materialien natürlicher oder synthetischer Herkunft einsetzen, beispielsweise von Lacken und Anstrichfarben, elektrophotographischen Tonern und Entwicklern und Inkjet-Tinten, insbesondere von Lacken.

In den nachfolgenden Beispielen bedeuten Teile Gewichtsteile.

### Herstellung von Alkyd-Melamin-Lacken:

AM5 Volltonlack (8 %): Es werden 22.8 Teile eines AM5 Anreibelacks (50 % Vialkyd AC 451 n/70SNB (UCB Resins and Additives), 50 % Solventnaphtha, 1 e) und 7.2 Teile Pigment unter Zugabe von Glasperlen in einer Schüttelmaschine dispergiert. Nach dem Dispergieren werden 30 Teile des Mahlgutes (Anreibelack + Pigment) mit 60 Teilen eines Auflackgemisches [26.4 % Vialkyd AC451n/70SNB (UCB Resins and Additives), 29.4 % Vialkyd AC451/60SNA (UCB Resins and Additives), 35.8 % Maprenal MF600/55BIB (UCB Resins and Additives), 6.2 % AM5 Hochsiedergemisch (35 % n-Butanol, 35 % Depanol I, 30 % Butyldiglykol), 2.2 % Solventnaphtha, 1 e] vermischt.

AM5 Aufhellung (1:20): Es werden 4.5 Teile AM5 Volltonlack und 24 Teile AM5 Weißlack [52.6 % Weißpaste (Standox GmbH, Artikel 256013), 24.1 % Vialkyd AC451/60SNA (UCB Resins and Additives), 15.2 % Maprenal MF600/55BIB (UCB Resins and Additives), 0.7 % BYK-331, 1 % in Solventnaphtha, 1e, 0.7 % Butyldiglykol, 1.4 % Diacetonalkohol, 2.8 % Depanol I, 2.5 % Solventnaphtha, 1 e] homogen vermischt.

Volltonlack und Aufhellung werden auf Prüfkarten aufgezogen. Die Transparenz wird visuell über schwarzem Grund bestimmt. In der Aufhellung werden Chroma, Farbwinkel und Helligkeit als Absolutwerte gemessen (Spektralphotometer SF 750, d8-Geometrie).

### Beispiel 1 (Vergleich)

Die Pigmentsynthese von Pigment Orange 74 erfolgt analog des in der CH-A-653 048 aufgeführten allgemeinen Beispiels für Diazolösung, Kupplungskomponente und Kupplung unter Verwendung derjenigen Reaktionskomponenten, welche in Nr. 7 der in der Patentschrift aufgeführten Tabellen angegeben sind. Das getrocknete Rohpigment wird, wie in CH-A-653 048 beschrieben, in reinem DMF gefinisht, filtriert und anschließend getrocknet. Man erhält ein Pigmentpulver mit kräftig orangefarbener Nuance (als Nr. 8 in der Tabelle der CH-A-653 048 aufgeführt).

Messwerte in Aufhellung AM5 (1:20):
absolutes Chroma C* = 42,74, absoluter Farbwinkel H* = 28,42, absolute Helligkeit L* = 73,44.

### Beispiel 2

### a) Diazolösung

40.4 Teile 1-Amino-2,5-dichlorbenzol-4-sulfonsäuredimethylamid werden langsam, unter Rühren in 145 Teile Wasser eingebracht, 2 h nachgerührt, 157 Teile 31-prozentige Salzsäure zugegeben und anschließend 6 h nachgerührt. Unter Zugabe von 260 Teilen Eis wird auf -5 °C abgekühlt, mit 20.8 Teilen 40-prozentiger Natriumnitritlösung versetzt, 1 Stunde bei max. 5 °C nachgerührt, 3.8 Teile Filtererde zugegeben und der Überschuss an Natriumnitrit mit einer geringen Menge Amidosulfonsäure beseitigt.

### b) Kupplungskomponente

Man löst 46 Teile 2-Hydroxy-3-naphthoesäure-4'-chlorphenylamid in 115 Teilen Wasser, 83.5 Teilen eines handelsüblichen nichtionischen Tensids (fl.) und 26 Teilen 33-prozentiger Natronlauge durch Rühren, gibt zur Lösung 3.8 Teile Filtererde zu und gibt die Lösung der Kupplungskomponente innerhalb 15 min unter Klärung in eine Lösung aus 285 Teilen Wasser, 48 Teilen 80-prozentiger Essigsäure, 7 Teilen eines nichtionischen Polyglykolethers, 14 Teilen eines nichtionischen Polyethers und 50 Teilen Eis. Man rührt 3-5 min nach, gibt weitere 7 Teile des nichtionischen Polyglykolethers zu und stellt für die Kupplung die Temperatur auf 20 °C ein.

### c) Kupplung

Auf die gefällte Kupplungskomponente aus b) lässt man innerhalb 3 Stunden die unter a) hergestellte Diazolösung zulaufen. Anschließend wird der Ansatz abfiltriert und mit 10.000 Teilen Wasser gewaschen. Das gebildete Pigment ist rotorange und wird als Presskuchen weiterverarbeitet.

### d) Nachbehandlung in Chlorbenzol / Wasser

Der Pigmentpresskuchen (ca. 400 Teile) aus c) wird anschließend in einem Autoklaven ca. 1 Stunde in einem Gemisch aus Chlorbenzol / Wasser bei 90 °C behandelt. Nach Abkühlung auf 30 °C wird die Suspension in einen Rundkolben gegeben und das Chlorbenzol über eine Wasserdampfdestillation innerhalb 2 h abdestilliert. Anschließend werden 4 Teile eines Fettalkoholpolyglykolethers zugesetzt und 30 min bei 85 °C gerührt. Die Suspension wird anschließend filtriert, der Pigment-Presskuchen gewaschen, getrocknet und gemahlen. Man erhält eine orangenfarbene Nuance. Messwerte in Aufhellung AM5 (1:20):
Absolutes Chroma C* = 43,09, absoluter Farbwinkel H* = 29,14, absolute Helligkeit L* = 73,79.

**Tabelle:**

| Absolute farbmetrische Werte Aufhellung AM5 (Angabe absoluter Winkel): | | | |
|---|---|---|---|
| Beispiel Nr. | Absolutes Chroma C* | Absoluter Farbwinkel H* | Absolute Helligkeit L* |
| 1 (Vergleich) | 42,74 | 28,42 | 73,44 |
| 2 | 43,09 | 29,14 | 73,79 |

| | | | |
|---|---|---|---|
| Vollton AM5 Beispiel 2 gegen Beispiel 1 (Vergleich): Relative Helligkeit dL = 0.8, Relative Transparenz dTra = 0,4. | | | |

## Patentansprüche

1. Verfahren zur Herstellung von reinem C.I. Pigment Orange 74, **dadurch gekennzeichnet, dass** man eine wässrige Suspension von C.I. Pigment Orange 74 - Rohpigment, gegebenenfalls nach Zugabe eines oder mehrerer organischer Lösemittel aus der Gruppe iso-Butanol, Chlorbenzol und o-Dichlorbenzol, einer Finishbehandlung unterwirft, gegebenenfalls das organische Lösemittel durch eine Destillation entfernt, und die zurückbleibende wässrige Pigmentsuspension mit einem nichtionischen Tensid versetzt, auf eine Temperatur von 30 bis 100 °C bringt und anschließend das Pigment abfiltriert.

2. Verfahren nach Anspruch 1, **dadurch gekennzeichnet, dass** die Finishbehandlung bei einer Temperatur zwischen 30 und 200 °C durchgeführt wird.

3. Verfahren nach Anspruch 1 oder 2, **dadurch gekennzeichnet, dass** die Finishbehandlung bei einer Temperatur zwischen 80 und 200 °C durchgeführt wird.

4. Verfahren nach einem oder mehreren der Ansprüche 1 bis 3, **dadurch gekennzeichnet, dass** die Finishbehandlung in Wasser unter Druck und bei Temperaturen von 100 bis 200 °C durchgeführt wird.

5. Verfahren nach einem oder mehreren der Ansprüche 1 bis 3, **dadurch gekennzeichnet, dass** die Finishbehandlung in o-Dichlorbenzol durchgeführt wird.

6. Verfahren nach einem oder mehreren der Ansprüche 1 bis 5, **dadurch gekennzeichnet, dass** die Menge an nichtionischem Tensid 5 bis 100 Gew.-%, bezogen auf das Gewicht des Pigments, beträgt.

7. Verfahren nach einem oder mehreren der Ansprüche 1 bis 6, **dadurch gekennzeichnet, dass** die Menge an nichtionischem Tensid 10 bis 30 Gew.-%, bezogen auf das Gewicht des Pigments, beträgt.

8. Verfahren nach einem oder mehreren der Ansprüche 1 bis 7, **dadurch gekennzeichnet, dass** man die wässrige Pigmentsuspension mit einem nichtionischen Tensid versetzt und auf eine Temperatur von 50 bis 90 °C bringt.

9. Verfahren nach einem oder mehreren der Ansprüche 1 bis 8, **dadurch gekennzeichnet, dass** das nichtionische Tensid ein Fettalkoholpolyglykolether ist.

10. C.I. Pigment Orange 74 hergestellt nach dem Verfahren gemäß einem oder mehreren der Ansprüche 1 bis 9.

11. C.I. Pigment Orange 74 nach Anspruch 10, **dadurch gekennzeichnet, dass** die optische Reinheit C* in einem Alkyd-Melamin-Lack mindestens 43,00 beträgt.

12. C.I. Pigment Orange 74 nach Anspruch 10 oder 11, **dadurch gekennzeichnet, dass** der absolute Farbwinkel H* in einem Alkyd-Melamin-Lack mindestens 29,00 beträgt.

13. C.I. Pigment Orange 74 nach einem oder mehreren der Ansprüche 10 bis 12, **dadurch gekennzeichnet, dass** die absolute Helligkeit L* in einem Alkyd-Melamin-Lack mindestens 73,60 beträgt.

14. Verwendung von C.I. Pigment Orange 74 nach mindestens einem der Ansprüche 10 bis 13 zum Pigmentieren von hochmolekularen organischen Materialien natürlicher oder synthetischer Herkunft, beispielsweise von Lacken und Anstrichfarben, elektrophotographischen Tonern und Entwicklern und Inkjet-Tinten.

## Claims

1. A process for preparing pure C.I. Pigment Orange 74, which comprises subjecting an aqueous suspension of crude C.I. Pigment Orange 74 pigment, optionally after addition of one or more organic solvents from the group consisting of isobutanol, chlorobenzene and o-dichlorobenzene, to a conditioning treatment, optionally removing any organic solvent by distillation, and admixing the remaining aqueous pigment suspension with a nonionic surfactant, bringing the admixture to a temperature of 30 to 100°C and then filtering off the pigment.

2. The process as claimed in claim 1 wherein the conditioning treatment is carried out at a temperature between 30 and 200°C.

3. The process as claimed in claim 1 or 2 wherein the conditioning treatment is carried out at a temperature between 80 and 200°C.

4. The process as claimed in one or more of claims 1 to 3 wherein the conditioning treatment is carried out in water under superatmospheric pressure and at temperatures of 100 to 200°C.

5. The process as claimed in one or more of claims 1 to 3 wherein the conditioning treatment is carried out in o-dichlorobenzene.

6. The process as claimed in one or more of claims 1 to 5 wherein the amount of nonionic surfactant is in the range from 5% to 100% by weight, based on the weight of the pigment.

7. The process as claimed in one or more of claims 1 to 6 wherein the amount of nonionic surfactant is in the range from 10% to 30% by weight, based on the weight of the pigment.

8. The process as claimed in one or more of claims 1 to 7 wherein the aqueous pigment suspension is admixed with a nonionic surfactant and brought to a temperature of 50 to 90°C.

9. The process as claimed in one or more of claims 1 to 8 wherein the nonionic surfactant is a fatty alcohol polyglycol ether.

10. A C.I. Pigment Orange 74 prepared by following the process as claimed in one or more of claims 1 to 9.

11. The C.I. Pigment Orange 74 as claimed in claim 10 wherein the optical purity C* is at least 43.00 in an alkyd-melamine varnish.

12. The C.I. Pigment Orange 74 as claimed in claim 10 or 11 wherein the absolute hue angle H* is at least 29.00 in an alkyd-melamine varnish.

13. The C.I. Pigment Orange 74 as claimed in one or more of claims 10 to 12 wherein the absolute lightness L* is at least 73.60 in an alkyd-melamine varnish.

14. The use of C.I. Pigment Orange 74 as claimed in at least one of claims 10 to 13 for pigmenting high molecular weight organic materials of natural or synthetic origin, for example varnishes and paints, electrophotographic toners and developers and inkjet inks.

## Revendications

1. Procédé pour la préparation de C.I. Pigment Orange 74 pur, **caractérisé en ce qu'**on soumet une suspension aqueuse de pigment brut de C.I. Pigment Orange 74, le cas échéant après addition d'un ou de plusieurs solvants organiques du groupe iso-butanol, chlorobenzène et o-dichlorobenzène, à un traitement de finition, on élimine le cas échéant le solvant organique par une distillation, et on ajoute à la suspension aqueuse résiduelle de pigment un agent tensioactif non ionique, on l'amène à une température de 30 à 100°C puis on sépare le pigment par filtration.

2. Procédé selon la revendication 1, **caractérisé en ce que** le traitement de finition est réalisé à une température entre 30 et 200°C.

3. Procédé selon la revendication 1 ou 2, **caractérisé en ce que** le traitement de finition est réalisé à une température entre 80 et 200°C.

4. Procédé selon l'une ou plusieurs des revendications 1 à 3, **caractérisé en ce que** le traitement de finition est réalisé dans de l'eau sous pression et à des températures de 100 à 200°C.

5. Procédé selon l'une ou plusieurs des revendications 1 à 3, **caractérisé en ce que** le traitement de finition est réalisé dans de l'o-dichlorobenzène.

6. Procédé selon l'une ou plusieurs des revendications 1 à 5, **caractérisé en ce que** la quantité d'agent tensioactif non ionique est de 5 à 100% en poids, par rapport au poids du pigment.

7. Procédé selon l'une ou plusieurs des revendications 1 à 6, **caractérisé en ce que** la quantité d'agent tensioactif non ionique est de 10 à 30% en poids, par rapport au poids du pigment.

8. Procédé selon l'une ou plusieurs des revendications 1 à 7, **caractérisé en ce qu'**on ajoute à la suspension aqueuse de pigment un agent tensioactif non ionique et on l'amène à une température de 50 à 90°C.

9. Procédé selon l'une ou plusieurs des revendications 1 à 8, **caractérisé en ce que** l'agent tensioactif non ionique est un polyglycoléther d'alcool gras.

10. C.I. Pigment Orange 74 préparé selon le procédé selon l'une ou plusieurs des revendications 1 à 9.

11. C.I. Pigment Orange 74 selon la revendication 10, **caractérisé en ce que** la pureté optique C* dans une laque d'alkyde-mélamine est d'au moins 43,00.

12. C.I. Pigment Orange 74 selon la revendication 10 ou 11, **caractérisé en ce que** la teinte absolue H* dans une laque d'alkyde-mélamine est d'au moins 29,00.

13. C.I. Pigment Orange 74 selon l'une ou plusieurs des revendications 10 à 12, **caractérisé en ce que** la luminance absolue L* dans une laque d'alkyde-mélamine est d'au moins 73,60.

14. Utilisation de C.I. Pigment Orange 74 selon au moins l'une quelconque des revendications 10 à 13 pour la pigmentation de matériaux organiques de haut poids moléculaire d'origine naturelle ou synthétique, par exemple de laques et de peintures, de toners et de révélateurs électrophotographiques et d'encres pour imprimantes à jet d'encre.
